Europäisches Patentamt

European Patent Office

Office européen des brevets

(11) Veröffentlichungsnummer: **0 304 726**

**A2**

(12) # EUROPÄISCHE PATENTANMELDUNG

(21) Anmeldenummer: 88112985.2

(22) Anmeldetag: 10.08.88

(51) Int. Cl.⁴: **B61H 11/02 , B61H 5/00 , B61H 13/20**

(30) Priorität: 25.08.87 DE 3728297

(43) Veröffentlichungstag der Anmeldung: 01.03.89 Patentblatt 89/09

(84) Benannte Vertragsstaaten: AT CH DE ES FR GB IT LI SE

(71) Anmelder: **Bergische Stahl-Industrie**
**Papenbergerstrasse 38**
**D-5630 Remscheid(DE)**

(72) Erfinder: **Rocholl, Hans**
**Damaschkestrasse 17a**
**D-5630 Remscheid(DE)**

(74) Vertreter: **Jung, Hermann L., Dipl.-Chem.**
**Postfach 1728 Augusta-Allee 10**
**D-6380 Bad Homburg v.d.H.(DE)**

(54) **Bremse für Schienenfahrzeuge.**

(57) Die Erfindung betrifft eine Bremse für Schienenfahrzeuge, bei der ein Federspeicher bei Ausfall des Druckmediums der Betriebsbremse die Bremsbeläge zur Anlage an die Bremsflächen bringt, wobei der Federspeicher 18 an einer entfernt vom Betriebsbremszylinder liegenden Stelle des Fahrzeugs angeordnet ist und eine kraftschlüssige Verbindung (19) mittels einer mechanischen, hydraulischen und/oder pneumatischen Übertragung, wie zum Beispiel Bowdenzug (19), Gestänge, hydraulische Betätigung, zwischen Federspeicher (18) und Betriebsbremse (17) vorgesehen ist.

EP 0 304 726 A2

## Bremse für Schienenfahrzeuge

Die Erfindung betrifft eine Bremse, insbesondere Schienenfahrzeugscheibenbremse, bei der ein Federspeicher bei Ausfall des Druckmediums der Betriebsbremse die Bremsbeläge zur Anlage an die Bremsflächen bringt.

Derartige Bremsen werden vielach angewendet und sind meist so aufgebaut, dass der Federspeicher Teil des Hydraulik- oder Pneumatikbremszylinders ist. Dieser Aufbau bietet einige Vorteile, wie zum Beispiel einfachere Aufhängung des Bremszylinders am Fahrzeug oder dessen Rahmen. Der Nachteil einer solchen Bremse besteht aber darin, dass der Betätigungszylinder relativ viel Platz benötigt, welcher insbesondere dann nicht vorhanden ist, wenn auf der die Bremsscheiben tragenden Achse noch ein Antriebsmotor oder dessen Getriebe angeordnet ist.

Der voeliegenden Erfindung liegt daher die Aufgabe zugrunde, die Nachteile der bekannten Bremsen zu vermeiden und den Platzbedarf des Betätigungszylinders auf ein Minimum zu beschränken.

Die Lösung der Aufgabe besteht darin, dass der Federspeicher an einer entfernt von dem Betriebsbremszylinder liegenden Stelle des Fahrzeugs angeordnet ist und eine kraftschlüssige Verbindung mittels einer mechanischen, hydraulischen und/oder pneumatischen Übertragung, wie zum Beispiel Bowdenzug, Gestäge, hydraulische Betätigung, zwischen Federspeicher und Betriebsbremse vorgesehen ist.

Der Vorteil liegt auf der Hand, da sowohl der Betriebsbremszylinder als auch der Federspeicher jeweils an den Stellen eines Drehgestells oder eines Fahrzeugrahmens angeordnet werden können, an denen noch genügend Platz vorhanden ist, sodass nur noch die Teile der Bremse auf oder an der die Bremsscheibe tragenden Achse eines Fahrzeugs angeordnet sein müssen, die in Berührung mit der Bremsscheibe kommen müssen.

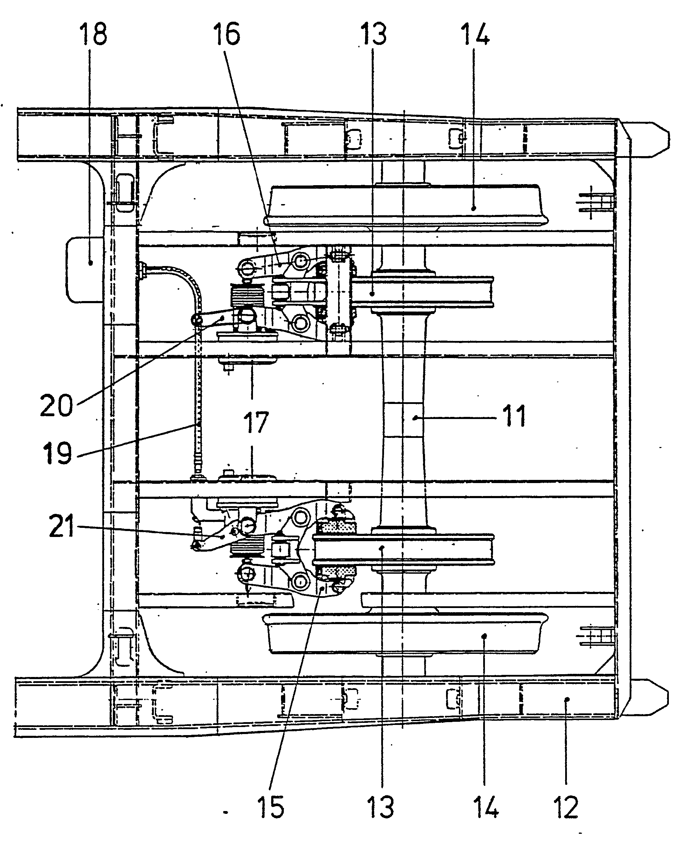

In der Zeichnung ist eine beispielsweise Ausführungsform der Erfindung dargestellt, bei der eine Achswelle 11 im Fahrzeugrahmen 12 gelagert ist und auf der zwei Bremsscheiben 13 in üblicher Weise befestigt ist. Ausserdem trägt die Achswelle 11 auch noch die beiden Räder 14. Jede Bremsscheibe 13 wird von je einer Bremszange 15 und 16 umfasst. Jeder Bremszange 15, 16 ist ein pneumatischer Druckzylinder 17 zugeordnet, mit dem die an der Bremszange 15 und 16 angeordneten Bremsbeläge an die Bremsflächen bzw. Reibflächen der Bremsscheiben 13 angedrückt werden, womit gebremst wird. Fällt nun der Pneumatikdruck in den Zylindern 17 aus, so kann das Fahrzeug nicht mehr gebremst werden. Um trotzdem das Fahrzeug zum Stehen zu bringen, ist an einem Querträger des Rahmens 12 ein ansich bekannter Federspeicherzylinder 18 angebracht, dessen Kolben über den Bowdenzug 19 mit dem Betätigungshebel 20 an der Bremszange 16 und mit dem Hebel 21 an der Bremszange 15 so verbunden ist, dass beim Druckausfall die Speicherfeder des Federspeichers 18 die Hebel 20 und 21 verdreht, wodurch die Bremsbeläge der Bremszangen 15 und 16 zur Anlage an die Brems- bzw. Reibflächen der Bremsscheiben 13 kommen und das Fahrzeug sicher abbremsen. Wird der Betriebsdruck im Bremssystem wieder aufgebaut, so wird auch der Federspeicherzylinder 18 in seine Wartestellung gebracht, in der die Hebel 20 und 21 wieder soweit verdreht sind, dass die Bremszangen 15 und 16 geöffnet sind. Damit ist das Bremssystem wieder in Normalstellung und kann mit dem pneumatischen Betriebsbremszylinder 17 bremsen.

Selbstverständlich kann anstelle des pneumatischen Zylinders auch ein hydraulischer Zylinder oder eine mechanische Betätigung für die Bremszange verwendet werden.

Anstelle des Bowdenzugs 19 kann jede andere mechanische, hydraulische und/oder pneumatische Übertragung zwischen Brems zylinder 17 und Federspeicherzylinder 18 verwendet werden. Man kann auch jeder einzelnen Bremszange 15 und 16 einen eigenen Federspeicherzylinder zuordnen oder auch einem einzigen Federspeicherzylinder mehr als die in der Zeichnung dargestellten zwei Bremszangen zuordnen.

## Ansprüche

1) Bremse, insbesondere Schienenfahrzeugscheibenbremse, bei der ein Federspeicher bei Ausfall des Druckmediums der Betriebsbremse die Bremsbeläge zur Anlage an die Bremsflächen bringt, dadurch gekennzeichnet, dass der Federspeicher (18) an einer entfernt von dem Betriebsbremszylinder (17) liegenden Stelle des Fahrzeugs (12) angeordnet ist und eine kraftschlüssige Verbindung (19) mittels einer mechanischen, hydraulischen und/oder pneumatischen Übertragung, wie zum Beispiel Bowdenzug (19), Gestänge, hydraulische Betätigung, zwischen Federspeicher (18) und Betriebsbremse (17) vorgesehen ist.

2) Bremse nach Anspruch 1, dadurch gekennzeichnet, dass der Federspeicher (18) mit zwei, vorzugsweise auf die gleiche Achse (11) wirkenden Betriebsbremszylindern wirkverbunden ist.